# EUROPEAN PATENT SPECIFICATION

(11) **EP 2 412 280 B1**
(45) Date of publication and mention of the grant of the patent: **12.02.2014**
(21) Application number: 10425218.4
(22) Date of filing: 30.06.2010
(51) Int. Cl.: A47J 31/40

(54) **Process for dispensing a beverage comprising a base liquid product and at least one flavouring and apparatus for implementing the process**
Verfahren zur Abgabe eines Getränks mit einem Basisflüssigkeitsprodukt und mindestens einem Geschmacksstoff sowie Vorrichtung zur Implementierung des Verfahrens
Procédé de fourniture d'une boisson comprenant un produit liquide de base et au moins un arôme et appareil pour l'application du procédé

(43) Date of publication of application: 01.02.2012
(73) Proprietor: Gruppo Cimbali S.p.A., 20082 Binasco (MI) (IT)
(72) Inventor: Quaratesi Guido, 20082 Binasco MI (IT); Volonte, Claudio, 20082 Binasco MI (IT)
(74) Representative: Perani, Aurelio

(56) References cited:
- WO-A2-2006/135864
- US-A1- 2005 095 341

## Description

This invention relates to a process for dispensing a beverage comprising a predetermined dose of a base liquid product and at least one predetermined dose of flavouring.

Preferably the base liquid product comprises milk, coffee or mixtures thereof.

The invention also relates to an apparatus for implementing the process.

Beverages to which a flavouring, such as, for example, suitably fluidised chocolate, mint, vanilla, cinnamon and the like are added to the base liquid product comprising milk, coffee or their mixtures are known in the art, as are procedures and equipment for producing and dispensing beverages of such types.

These can be dispensed in both a cold and a hot state, and may also be frothed through the addition of a quantity of air, which may be aspirated or compressed.

According to the known art, a predetermined quantity of flavouring is added to the specified dose of base liquid product, preferably milk, coffee or mixtures thereof, within a mixing chamber which receives the dose of base liquid product, for example milk, and the pre-selected quantity of flavouring, normally drawn from a specific container selected from a plurality of containers containing different flavourings.

In the said mixing chamber the base liquid product is delivered through the expulsive action of a pump which draws it from a suitable container, which is normally kept under refrigerated conditions.

One example of such technology, with reference to milk as the base liquid product, is illustrated in document US - A - 7,507,430. As described in that document, a plurality of containers, each containing a different flavouring, can from time to time be brought individually into communication with a mixing device through respective conduits each of which are provided with their own pump.

A dose of milk is delivered to the mixing chamber through the respective pumping means, which draws the milk from a refrigerated container.

In the situation illustrated, the pumping means comprise a Venturi effect device into which steam is injected. The latter not only draws milk from the appropriate refrigerated container but also heats it to a predetermined temperature.

If desired, the known apparatus illustrated in the abovementioned document also comprises the aspiration of air, which is added to the dose of milk during its passage to the mixing chamber.

In the latter the preselected flavouring is distributed within the dose of heated milk through a vortex action, and may be frothed.

The flavoured drink is then discharged into a collecting container.

Another known example of apparatus for the preparation of beverages based on flavoured milk and also, if required, foamed through the use of air, is illustrated and described in EP - A - 2,011,421.

According to the technique described in this document, the dose of milk is drawn from a refrigerated container and sent through a pump and a respective dedicated conduit to an injection chamber in which a predetermined quantity of flavouring, which in the example illustrated is in powder form, is also injected.

In the bottom of the injection chamber the known apparatus provides a mixing chamber in which a mixing and pumping rotor operates driven by an electric motor.

The dose of milk and added flavouring are mixed in this way within the mixing chamber and then the flavoured beverage is expelled into a collection container.

If required aspirated or compressed air may be added to the beverage through injecting air into the injection chamber before the chamber in which mixing of the milk with the flavouring takes place.

In both the known technologies described above it is clear that the flavoured beverage is produced by subjecting the dose of milk and the respective dose of flavouring to a vortex mixing action within a suitable mixing chamber and subsequently expelling or discharging them into the collection container for consumption of the beverage.

Another example of the known art, with reference to coffee as the base liquid product, is described in document EP-A-2,011,422. According to the description in the cited document a dose of coffee prepared in any conventional way is poured into a collection cup. The required dose of a flavouring product is caused to enter the latter by drawing it from a cylinder by injecting compressed air into the latter. As a consequence mixing of the dose of flavouring with the dose of coffee takes place through a vortex action brought about by the jet of flavouring driven into the collection cup by the compressed air.

Known processes for preparing flavoured beverage thus have the disadvantage that there is a conspicuous loss of efficacy of the flavouring due to the vortex action in mixing. This action in fact brings about the formation of highly volatile aerosols containing particularly flavourful light molecules which are typical of the flavouring used.

Once they have formed, and because of their high volatility, the aerosols quickly disperse outside the mixing chamber, dispersing into the environment, and this is because the mixing chamber is normally open, as in the case in which mixing takes place in the collecting cup, or in any event not under a hermetic seal.

The problem underlying this invention is that of being able to avoid the loss of volatile elements of the flavourings associated with the particular intensity of the odour and taste of the flavourings so that when injected into the dose of base liquid product, whether milk, coffee or their mixtures, they will impart an intense flavouring upon the latter, improving the taste of the flavoured beverage and therefore its attractiveness to the end consumer, regardless of its temperature and whether or not it is foamed.

The problem is resolved through the process of preparing and dispensing an automated beverage described in claim 1 and through the apparatus according to claim 7, which are to be understood to be made reference to here.

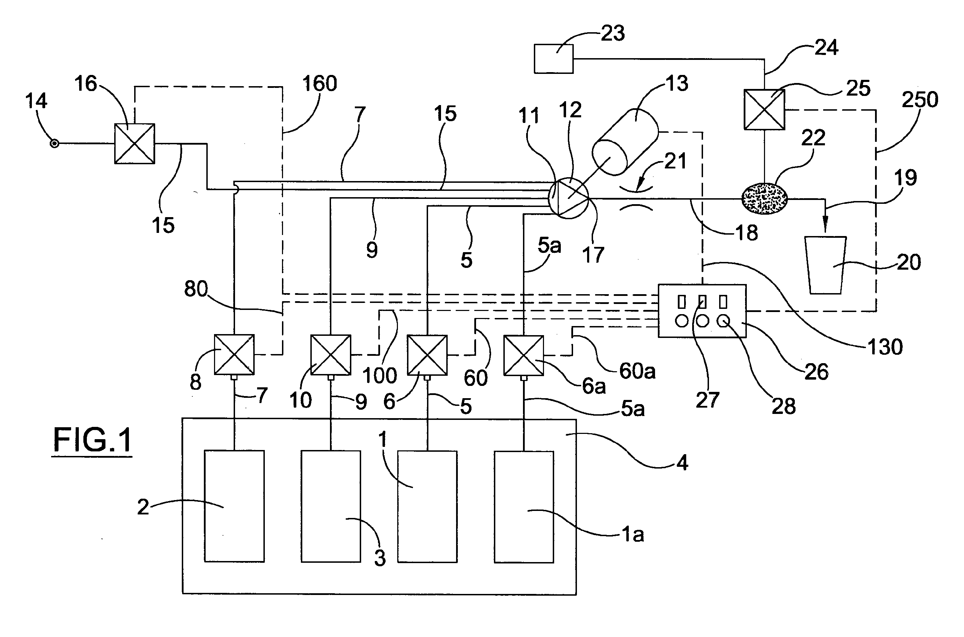

The invention will now be more particularly described with reference to Figure 1 in the appended diagrammatical drawing of an apparatus for the preparation and dispensing of a flavoured beverage based on milk or coffee.

According to the invention the apparatus comprises a container 1 for milk, a container 1a for coffee, and containers 2 and 3 for respective flavourings, for example mint and vanilla. The latter, although illustrated to be two in number, represent a plurality of containers with respective different flavourings.

In the example illustrated all the containers for milk, coffee and flavourings are placed in a refrigerated environment indicated schematically by 4, which is preferably held at a temperature of approximately 4°C.

As an alternative, at least only milk container 1 is placed in a refrigerated environment on account of preservation needs.

Milk container 1 is provided with a conduit 5 fitted with an opening and closing valve 6, which is also adjustable.

Coffee container 1a is provided with its own conduit 5a fitted with an opening and closing valve 6a, which is also adjustable.

Flavouring container 2 is provided with a respective conduit 7 fitted with an opening closing valve 8, which is also adjustable.

Similarly container 3 for another flavouring is provided with a respective conduit 9 fitted with an opening and closing valve 10, which is also adjustable.

Conduits 5, 5a, 7 and 9 all flow together at a suction inlet 11 of suction/pumping means, indicated in the example described by a gear pump 12 driven by a respective electric motor 13. A source of air 14 is also connected to suction inlet 11 through a conduit dedicated for the purpose, indicated by 15, in which there is fitted a valve 16 for opening and closing and where necessary control of the flow.

Suction/pumping means 12, for example a gear pump or a peristaltic pump, is connected at delivery outlet 17 to a delivery conduit 18 which ends at a collection container 20, for example comprising a conventional cup or mug, in a nozzle 19.

A fixed gauge 21 capable of adjusting the through cross-section of the conduit is fitted in delivery conduit 18. This gauge 21 may also be of the continuously adjustable type.

A device 22 for heating the flavoured beverage passing through conduit 18 to collection container 20 where necessary is also provided in conduit 18. The heating device is preferably fed by a source of steam 23, to which it is connected through a feed conduit 24 in which there is fitted a valve 25 for opening and closing and also where required for controlling flow through the said conduit.

The valves previously described, 6, 6a, 8, 10, 16 and 25, are all preferably electrically controlled valves and are all connected through respective electrical connections 60, 60a, 80, 100, 160 and 250 to a command and control unit (CPU) indicated by 26.

Electric motor 13 driving suction/pumping means 12 is also connected to that unit through electrical connection 130.

In accordance with a preferred embodiment the latter are housed in a refrigerated environment which may comprise the same refrigerated environment 4 in which the milk, coffee and flavouring containers are located.

Control unit 26 is provided with a plurality of switches 27 for selection of the type of flavouring with which the milk or coffee-based beverage is to be flavoured, and a plurality of switches 28 to select the options of a foamed beverage, an unfoamed beverage and possibly a heated beverage.

Heating device 22 is preferably of the type illustrated and described in EP 1,977,668 B1.

From what has been described above it will be appreciated that when a beverage comprising a dose of milk or coffee to which a dose of flavouring product is added, for example mint in liquid form, is prepared, milk container 1 or coffee container 1a and flavouring container 2, on the assumption that the mint flavouring is located in said container 2, are placed in direct connection with suction inlet 11 of pump 12 by opening respective valves 6, or 6a and 8, opening the latter by the correct amount in proportion to the respective doses which have to be aspirated. Control of valves 6, 6a and 8 is provided by electronic control unit 26 by pressing respective selection switches 27 and 28.

Pump 12 is driven by motor 13 and at the same time draws in the dose of milk or coffee and the dose of flavouring.

These are mixed together directly in the pump's suction chamber, compressed and expelled towards delivery outlet 17 and from there into delivery conduit 18.

Gauging device 21 provides the necessary resistance to the flow which in turn gives rise to an increase in pressure upstream which will bring about intimate copenetration of the flavouring with the dose of milk or coffee as they pass through pump 12.

From the delivery conduit the flavoured beverage is discharged into collection container 20 and is ready for use.

If the flavoured beverage is required to be hot at a particular temperature, this can also be selected, the respective selection of one of switches 27 and/or 28 causing valve 25 to open and deliver steam via conduit 24 to heating device 22 located on delivery conduit 18.

When in addition to heating, or as an alternative to it, it is required that the beverage be frothed through the injection of air, selection of one of switches 27 and/or 28 will cause valve 16 to open and place air source 14 in direct communication with suction inlet 11 of pump 12 through conduit 15.

Adjustment of the opening of valve 16 determines the possibility of adjusting the frothing of the flavoured beverage.

It is obvious that by acting on valves 8 and 10, closing one and opening the other, it is possible to change the flavouring which has to be added to the dose of milk or coffee, just as it is possible when requested to add two or more flavourings at the same time or to constitute the base liquid product in the form of a mixture of milk and coffee.

Air source 14 may be represented by the environment or by a conventional compressor capable of supplying compressed air.

With the method according to the invention in which the dose of milk or the dose of coffee and the dose of flavouring are drawn up together from their respective containers at the same time, compressed and then expelled to a collection container, it becomes possible to obtain flavoured beverages with a high level of diffusion of the flavouring without the loss of volatile substances specific to the flavouring as a result of avoiding the formation of aerosols which might be dispersed in the environment surrounding the apparatus.

In the case where drinks frothed with air which are consumed cold are dispensed, it has been found that their quality is particularly improved if all the starting materials used are drawn off at a temperature around 4°C and if suction/ compression device 12 is maintained at the same temperature.

There is also the possibility that layers of beverage having different flavours which remain separate as a consequence of their different densities can be accumulated in a single collection container.

Dimensions and materials can obviously be of any nature depending upon requirements without thereby going beyond the scope of the invention as described above and claimed below.

## Claims

1. A process for dispensing a beverage comprising a predetermined dose of a base liquid product and at least one predetermined dose of flavouring, the dose of base liquid product and the dose of flavouring **being** drawn up together at the same time from respective containers (1, 1a, 2 and 3), **characterised in that the doses of base liquid product and of flavouring drawn up are mixed together directly in a pump's suction chamber,** are compressed and are expelled to a collection container (20) for the flavoured beverage.

2. A process according to claim 1, **characterised in that** a predetermined quantity of air is also drawn up together with the dose of base liquid product and the dose of flavouring.

3. A process according to claim 1 or 2, **characterised in that** it comprises a stage of heating the flavoured beverage which is performed while the latter is being delivered to the collection container (20).

4. A process according to claim 3, **characterised in that** the said stage of heating the flavoured beverage comprises injecting a predetermined quantity of steam therein according to the temperature which has to be imparted to the beverage.

5. A process according to any one of claims 1 to 4, in which the said base liquid product comprises milk.

6. A process according to any one of claims 1 to 5, in which the said base liquid product comprises coffee.

7. Apparatus for dispensing a beverage comprising a predetermined dose of a base liquid product and a predetermined dose of at least one flavouring, the apparatus comprising at least one container (1, 1a) containing base liquid product, at least one container (2, 3) containing flavouring, a container (20) for collection of the flavoured beverage and a suction/compression device (12) with a suction inlet (11) and a pressurised delivery outlet (17), **characterised in that** the said suction inlet (11) of the suction/compression device (12) is connected to both at least one container containing a base liquid product (1, 1a) and at least one container containing flavouring (2, 3) through respective conduits (5, 5a, 7, 9) each fitted with respective valve means (6, 6a, 8, 10) and **in that** the said pressurised delivery outlet (17) of the suction/compression device (12) is connected to a delivery conduit (18) ending in a nozzle (19) delivering into the said container (20) for collection of the flavoured beverage.

8. An apparatus according to claim 7, **characterised in that** it includes a first plurality of containers (1, 1a) each containing a respective base liquid product for the beverage, a second plurality of containers (2, 3) each containing a respective flavouring and that the said suction inlet (11) of the said suction/compression device (12) is connected to all the containers of the said first and second pluralities of containers through respective conduits (5, 5a, 7, 9) each of which comprises respective valve means (6, 6a, 8, 10).

9. An apparatus according to claims 7 or 8, **characterised in that** it comprises an air source (14), a conduit (15) connecting the said air source (14) with the said suction inlet (11) of the said suction/compression device (12) as well as valve means (16) fitted in the said conduit (15).

10. An apparatus according to any one of claims 7 to 9 **characterised in that** it includes a device (22) for heating the flavoured beverage, heating the said beverage in the delivery conduit (18) between the said pressurised delivery outlet (17) of the said suction/compression device (12) and the said collection container (20).

11. An apparatus according to claim 10, **characterised in that** the said heating device (22) comprises a source (23) of steam, a conduit (24) originating from the said source (23) and opening into the said delivery conduit (18) for the flavoured beverage, together with valve means (25) located in the said conduit originating from the said steam source (25).

12. An apparatus according to any one of claims 7 to 11, in which the said valve means (6, 6a, 8, 10, 16, 25) comprise valves operated by an electrical actuator capable of opening and closing the respective conduit in which it is fitted.

13. An apparatus according to claim 12, in which each of the said valves (6, 6a, 8, 10, 16, 25) operated by a respective electrical actuator is capable of controlling the flow passing through the respective conduit in which it is fitted.

14. An apparatus according to any one of claims 7 to 13, in which a calibrated choke (21) is fitted into the said delivery conduit (18) for the flavoured beverage between the said pressurised delivery outlet (17) of the suction/compression device (12) and the said heating device (22).

15. An apparatus according to any one of claims 7 to 14, **characterised in that** the said suction/compression device (12) is a geared pump driven by an electric motor (13).

16. An apparatus according to any one of claims 7 to 14, **characterised in that** the said suction/compression device (12) is a peristaltic pump driven by an electric motor (13).

17. An apparatus according to any one of claims 7 to 16, **characterised in that** the said suction/compression device (12) is housed within a refrigerated environment.

18. An apparatus according to any one of claims from 7 to 17, **characterised in that** it includes a control unit (26) connected to the said valve means (6, 6a, 8, 10, 16, 25) and the motor (13) driving the said suction/compression device (12).

## Patentansprüche

1. Verfahren zum Ausgeben eines Getränks, das eine vorbestimmte Portion eines Basisflüssigprodukts und mindestens eine vorbestimmte Portion eines Geschmacksstoffs umfasst, wobei die Portion des Basisflüssigprodukts und die Portion des Geschmacksstoffs zusammen zur gleichen Zeit aus jeweiligen Behältern (1, 1a, 2 und 3) angesaugt werden, **dadurch gekennzeichnet, dass** die angesaugten Portionen des Basisflüssigprodukts und des Geschmacksstoffs direkt in der Saugkammer einer Pumpe zusammengemischt werden, verdichtet werden und in einen Sammelbehälter (20) für das aromatisierte Getränk ausgestoßen werden.

2. Verfahren nach Anspruch 1, **dadurch gekennzeichnet, dass** eine vorbestimmte Menge Luft ebenfalls zusammen mit der Basisflüssigproduktportion und der Geschmacksstoffportion angesaugt wird.

3. Verfahren nach Anspruch 1 oder 2, **dadurch gekennzeichnet, dass** es eine Phase des Erhitzens des aromatisierten Getränks umfasst, die erfolgt, während das Letztere in den Sammelbehälter (20) gefördert wird.

4. Verfahren nach Anspruch 3, **dadurch gekennzeichnet, dass** die Phase des Erhitzens des aromatisierten Getränks das darin Einleiten einer vorbestimmten Dampfmenge entsprechend der dem Getränk zu gebenden Temperatur umfasst.

5. Verfahren nach einem der Ansprüche 1 bis 4, bei dem das Basisflüssigprodukt Milch umfasst.

6. Verfahren nach einem der Ansprüche 1 bis 5, bei dem das Basisflüssigprodukt Kaffee umfasst.

7. Vorrichtung zum Ausgeben eines Getränks, das eine vorbestimmte Portion eines Basisflüssigprodukts und eine vorbestimmte Portion von mindestens einem Geschmacksstoff umfasst, wobei die Vorrichtung mindestens einen Behälter (1, 1a), der das Basisflüssigprodukt enthält, mindestens einen Behälter (2, 3), der den Geschmacksstoff enthält, einen Behälter (20) zum Sammeln des aromatisierten Getränks und ein Saug-/Verdichtungsgerät (12) mit einem Saugeinlass (11) und einem druckbeaufschlagten Förderauslass (17) umfasst, **dadurch gekennzeichnet, dass** der Saugeinlass (11) des Saug-/Verdichtungsgeräts (12) sowohl mit dem mindestens einen Behälter, der das Basisflüssigprodukt (1, 1a) enthält, als auch mit dem mindestens einen Behälter, der den Geschmacksstoff (2, 3) enthält, durch entsprechende Leitungen (5, 5a, 7, 9) verbunden ist, die mit entsprechenden Ventilmitteln (6, 6a, 8, 10) versehen sind, und dadurch, dass der druckbeaufschlagte Förderauslass (17) des Saug-/Verdichtungsgeräts (12) mit einer Förderleitung (18) verbunden ist, die in einer Düse (19) endet, die in den Behälter (20) zum Sammeln des aromatisierten Getränks fördert.

8. Vorrichtung nach Anspruch 7, **dadurch gekennzeichnet, dass** sie eine erste Vielzahl von Behältern (1, 1a), die jeweils ein entsprechendes Basisflüssigprodukt für das Getränk enthalten, und eine zweite Vielzahl von Behältern (2, 3), die jeweils einen entsprechenden Geschmacksstoff enthalten, umfasst und dass der Saugeinlass (11) des Saug-/Verdichtungsgeräts (12) mit allen Behältern der ersten und zweiten Vielzahlen von Behältern durch entsprechende Leitungen (5, 5a, 7, 9) verbunden ist, von denen jede entsprechende Ventilmittel (6, 6a, 8, 10) umfasst.

9. Vorrichtung nach Anspruch 7 oder 8, **dadurch gekennzeichnet, dass** sie eine Luftquelle (14), eine Leitung (15), die diese Luftquelle (14) mit dem Saugeinlass (11) des Saug-/Verdichtungsgeräts (12) verbindet, und Ventilmittel (16) umfasst, die in diese Leitung (15) eingebaut sind.

10. Vorrichtung nach einem der Ansprüche 7 bis 9 **dadurch gekennzeichnet, dass** sie ein Gerät (22) zum Erhitzen des aromatisierten Getränks umfasst, welches das Getränk in der Förderleitung (18) zwischen dem druckbeaufschlagten Förderauslass (17) des Saug-/Verdichtungsgeräts (12) und dem Sammelbehälter (20) erhitzt.

11. Vorrichtung nach Anspruch 10, **dadurch gekennzeichnet, dass** das Heizgerät (22) eine Dampfquelle (23), eine Leitung (24), die von dieser Quelle (23) abgeht und in die Förderleitung (18) für das aromatisierte Getränk mündet, zusammen mit Ventilmitteln (25) umfasst, die sich in dieser von der Dampfquelle (25) abgehenden Leitung befinden.

12. Vorrichtung nach einem der Ansprüche 7 bis 11, bei der die Ventilmittel (6, 6a, 8, 10, 16, 25) von einem elektrischen Stellantrieb betätigte Ventile umfassen, die imstande sind, die jeweilige Leitung, in die sie eingebaut sind, zu öffnen und zu schließen.

13. Vorrichtung nach Anspruch 12, bei der jedes der von einem entsprechenden elektrischen Stellantrieb betätigten Ventile (6, 6a, 8, 10, 16, 25) imstande ist, den durch die jeweilige Leitung, in die es eingebaut ist, strömenden Fluss zu steuern.

14. Vorrichtung nach einem der Ansprüche 7 bis 13, bei der eine kalibrierte Drossel (21) in die Förderleitung (18) für das aromatisierte Getränk zwischen den druckbeaufschlagten Förderauslass (17) des Saug-/Verdichtungsgeräts (12) und das Heizgerät (22) eingebaut ist.

15. Vorrichtung nach einem der Ansprüche 7 bis 14, **dadurch gekennzeichnet, dass** das Saug-/Verdichtungsgerät (12) eine Zahnradpumpe ist, die von einem Elektromotor (13) angetrieben wird.

16. Vorrichtung nach einem der Ansprüche 7 bis 14, **dadurch gekennzeichnet, dass** das Saug-/Verdichtungsgerät (12) eine Schlauchpumpe ist, die von einem Elektromotor (13) angetrieben wird.

17. Vorrichtung nach einem der Ansprüche 7 bis 16, **dadurch gekennzeichnet, dass** das Saug-/Verdichtungsgerät (12) in einer gekühlten Umgebung untergebracht ist.

18. Vorrichtung nach einem der Ansprüche 7 bis 17, **dadurch gekennzeichnet, dass** sie eine Steuereinheit (26) umfasst, die mit den Ventilmitteln (6, 6a, 8, 10, 16, 25) und dem Motor (13), der das Saug-/Verdichtungsgerät (12) antreibt, verbunden ist.

## Revendications

1. Procédé pour distribuer une boisson comprenant une dose prédéterminée de produit liquide de base et au moins une dose prédéterminée d'aromatisant, la dose de produit liquide de base et la dose d'aromatisant étant tirés conjointement au même moment à partir de récipients respectifs (1, 1a, 2 et 3), **caractérisé en ce que** les doses de produit liquide de base et d'aromatisant tirées sont mélangées ensemble directement dans une chambre d'aspiration de la pompe, sont comprimées et sont expulsées vers un récipient collecteur (20) pour la boisson aromatisée.

2. Procédé selon la revendication 1, **caractérisé en ce qu'**une quantité prédéterminée d'air est également tirée conjointement à la dose de produit liquide de base et à la dose d'aromatisant.

3. Procédé selon la revendication 1 ou 2, **caractérisé en ce qu'**il comprend une étape de chauffage de la boisson aromatisée qui est effectuée alors que cette dernière est distribuée au récipient collecteur (20).

4. Procédé selon la revendication 3, **caractérisé en ce que** ladite étape de chauffage de la boisson aromatisée comprend l'injection d'une quantité prédéterminée de vapeur dans celle-ci en fonction de la température qui doit être communiquée à la boisson.

5. Procédé selon l'une quelconque des revendications 1 à 4, dans lequel ledit produit liquide de base comprend du lait.

6. Procédé selon l'une quelconque des revendications 1 à 5, dans lequel ledit produit liquide de base comprend du café.

7. Appareillage pour distribuer une boisson comprenant une dose prédéterminée de produit liquide de base et une dose prédéterminée d'au moins un aromatisant, l'appareillage comprenant au moins un récipient (1, 1a) contenant un produit liquide de base, au moins un récipient (2, 3) contenant un aromatisant, un récipient (20) pour la collecte de la boisson aromatisée et un dispositif d'aspiration/compression (12) avec une entrée d'aspiration (11) et une sortie de distribution pressurisée (17), **caractérisé en ce que** ladite entrée d'aspiration (11) du dispositif d'aspiration/compression (12) est connectée à la fois à au moins un récipient contenant un produit liquide de base (1, 1a) et à au moins un récipient contenant un aromatisant (2, 3) à travers des conduits respectifs (5, 5a, 7, 9) équipés chacun de moyens de vanne respectifs (6, 6a, 8, 10) et **en ce que** ladite sortie de distribution pressurisée (17) du dispositif d'aspiration/compression (12) est connectée à un conduit de distribution (18) terminant en une buse (19) distribuant dans ledit récipient (20) pour la collecte de la boisson aromatisée.

8. Appareillage selon la revendication 7, **caractérisé en ce qu'**il comprend une première pluralité de récipients (1, 1a) contenant chacun un produit liquide de base respectif pour la boisson, une deuxième pluralité de récipients (2, 3) contenant chacun un aromatisant respectif et **en ce que** ladite entrée d'aspiration (11) dudit dispositif d'aspiration/compression (12) est connectée à tous les récipients desdites première et deuxième pluralités de récipients à travers des conduits respectifs (5, 5a, 7, 9) chacun desquels comprend des moyens de vanne respectifs (6, 6a, 8, 10).

9. Appareillage selon la revendication 7 ou 8, **caractérisé en ce qu'**il comprend une source d'air (14), un conduit (15) connectant ladite source d'air (14) à ladite entrée d'aspiration (11) dudit dispositif d'aspiration/compression (12) ainsi que des moyens de vanne (16) montés dans ledit conduit (15).

10. Appareillage selon l'une quelconque des revendications 7 à 9, **caractérisé en ce qu'**il comprend un dispositif (22) pour chauffer la boisson aromatisée, chauffant ladite boisson dans le conduit de distribution (18) entre ladite sortie de distribution pressurisée (17) dudit dispositif d'aspiration/compression (12) et ledit récipient collecteur (20).

11. Appareillage selon la revendication 10, **caractérisé en ce que** ledit dispositif chauffant (22) comprend une source de vapeur (23), un conduit (24) partant de ladite source (23) et débouchant dans ledit conduit de distribution (18) pour la boisson aromatisée, conjointement à des moyens de vanne (25) situés dans ledit conduit partant de ladite source de vapeur (25).

12. Appareillage selon l'une quelconque des revendications 7 à 11, dans lequel lesdits moyens de vanne (6, 6a, 8, 10, 16, 25) comprennent des vannes actionnées par un actuateur électrique capable d'ouvrir et de fermer le conduit respectif dans lequel il est installé.

13. Appareillage selon la revendication 12, dans lequel chacune desdites vannes (6, 6a, 8, 10, 16, 25) actionnées par un actuateur électrique respectif est capable de contrôler le flux passant à travers le conduit respectif dans lequel elle est installée.

14. Appareillage selon l'une quelconque des revendications 7 à 13, dans lequel une soupape réductrice calibrée (21) est installée dans ledit conduit de distribution (18) pour la boisson aromatisée entre ladite sortie de distribution pressurisée (17) du dispositif d'aspiration/compression (12) et ledit dispositif chauffant (22).

15. Appareillage selon l'une quelconque des revendications 7 à 14, **caractérisé en ce que** ledit dispositif d'aspiration/compression (12) est une pompe à engrenages entraînée par un moteur électrique (13).

16. Appareillage selon l'une quelconque des revendications 7 à 14, **caractérisé en ce que** ledit dispositif d'aspiration/compression (12) est une pompe péristaltique entraînée par un moteur électrique (13).

17. Appareillage selon l'une quelconque des revendications 7 à 16, **caractérisé en ce que** ledit dispositif d'aspiration/compression (12) est logé à l'intérieur d'un environnement réfrigéré.

18. Appareillage selon l'une quelconque des revendications 7 à 17, **caractérisé en ce qu'**il comprend une unité de commande (26) connectée auxdits moyens de vanne (6, 6a, 8, 10, 16, 25) et au moteur (13) entraînant ledit dispositif d'aspiration/compression (12).
